(19) Europäisches Patentamt
European Patent Office
Office européen des brevets

(11) **EP 2 870 814 B1**

(12) **EUROPEAN PATENT SPECIFICATION**

(45) Date of publication and mention
of the grant of the patent:
**14.03.2018 Bulletin 2018/11**

(51) Int Cl.:
**H04W 72/12** (2009.01)     **H04W 76/04** (0000.00)
**H04W 52/24** (2009.01)     **H04W 72/08** (2009.01)

(21) Application number: **12743796.0**

(22) Date of filing: **06.07.2012**

(86) International application number:
**PCT/SE2012/050807**

(87) International publication number:
**WO 2014/007711 (09.01.2014 Gazette 2014/02)**

(54) **METHODS AND NODES FOR MULTIPLE USER MIMO SCHEDULING**

VERFAHREN UND KNOTEN ZUR MIMO-PLANUNG FÜR MEHRERE BENUTZER

PROCÉDÉS ET NOEUDS POUR PLANIFICATION MIMO MULTIUTILISATEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**13.05.2015 Bulletin 2015/20**

(73) Proprietor: **Telefonaktiebolaget LM Ericsson (publ)**
**164 83 Stockholm (SE)**

(72) Inventors:
• **FAN, Rui**
**Beijing 100102 (CN)**
• **LIU, Jinhua**
**Beijing 100102 (CN)**
• **LI, Chan**
**Beijing 100102 (CN)**

(74) Representative: **Brann AB**
**P.O. Box 3690**
**Drottninggatan 27**
**103 59 Stockholm (SE)**

(56) References cited:
**WO-A1-2012/054699**     **US-A1- 2012 069 757**

• **TEXAS INSTRUMENTS: "Downlink MU-MIMO and Related Feedback Support", 3GPP DRAFT; R1-095019 TI MU-MIMO_V1, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Jeju; 20091109, 9 November 2009 (2009-11-09), XP050389368, [retrieved on 2009-11-13]**

**Description**

**TECHNICAL FIELD**

The disclosure relates to Multiple User (MU) Multiple-Input-Multiple-Output (MIMO) scheduling, and more specifically to a method and a radio base station for link adaptation at MU-MIMO scheduling.

**BACKGROUND**

3GPP Long Term Evolution (LTE) is the fourth-generation mobile communication technologies standard developed within the 3rd Generation Partnership Project (3GPP) to improve the Universal Mobile Telecommunication System (UMTS) standard to cope with future requirements in terms of improved services such as higher data rates, improved efficiency, and lowered costs. The Universal Terrestrial Radio Access Network (UTRAN) is the radio access network of a UMTS and Evolved UTRAN (E-UTRAN) is the radio access network of an LTE system. In an UTRAN and an E-UTRAN, a User Equipment (UE) is wirelessly connected to a Radio Base Station (RBS) commonly referred to as a NodeB (NB) in UMTS, and as an evolved NodeB (eNodeB or eNB) in LTE. An RBS is a general term for a radio network node capable of transmitting radio signals to a UE and receiving signals transmitted by a UE.

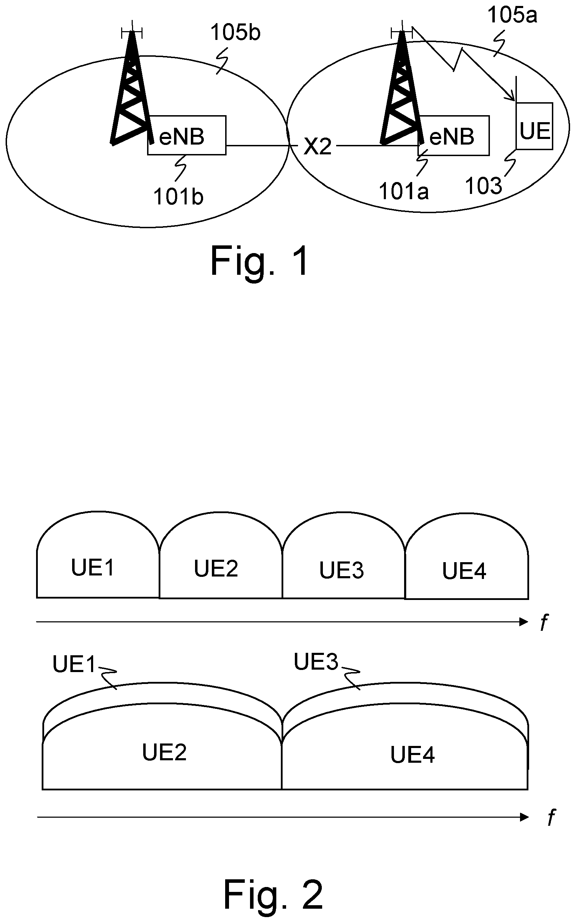

**Figure 1** illustrates a radio access network in an LTE system. An eNB 101a serves a UE 103 located within the RBS's geographical area of service or the cell 105a. The eNB 101a is directly connected to the core network. The eNB 101a is also connected via an X2 interface to a neighboring eNB 101b serving another cell 105b. Although the eNBs of this example network serves one cell each, an eNB may serve more than one cell.

Release 8 of LTE supports uplink MU-MIMO, which implies uplink transmissions from multiple UEs using the same uplink time-frequency resource and relying on the availability of multiple receive antennas at the RBS to separate the two or more transmissions. The difference between ordinary Frequency Division Multiplexing (FDM) scheduling and MU-MIMO scheduling is schematically illustrated in **Figure 2.** In the upper part of **Figure 2,** all UEs (UE1, UE2, UE3, UE4) are allocated different resource blocks in frequency, also referred to as FDM scheduling. In the lower part of **Figure 2,** MU-MIMO scheduling is illustrated, where UE1 and UE2 are co-scheduled on the same resources in frequency, and UE3 and UE4 are co-scheduled on the same resources.

A prior art example is US 2012/069757 A1, 22 March 2012, M. JIANG et al., which discloses a Link Adaptation for LTE/LTE-A Uplink with a Turbo SIC MIMO Receiver, including an Extension to MU-MIMO Case. Another prior art example is the 3GPP document Downlink MU-MIMO and Related Feedback Support", R1-095019, Texas Instruments. R1-095019 proposes an enhanced implicit CQI/PMI scheme to improve the performance of MU-MIMO beamforming. Link adaptation is based on predicted CQI, given UE feedback. The reported SU-MIMO CQI is processed by the eNB to derive the predicted CQI for link adaptation. One important benefit of uplink MU-MIMO is that it can get a similar gain in system throughput as Single User (SU)-MIMO where spatial multiplexing is used, without the need for multiple transmission antennas at the UE side. MU-MIMO thus allows for a less complex UE implementation. The potential system gain of uplink MU-MIMO relies on more than one UE being available for transmission using the same time-frequency resource. The process of pairing UEs that should share the same time-frequency resources is non-trivial and requires suitable radio-channel conditions.

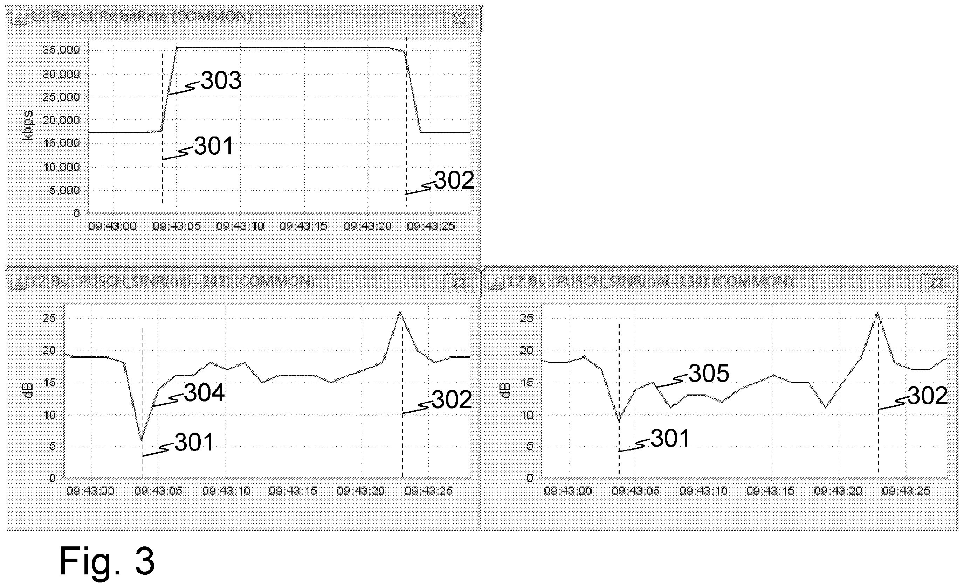

Ideally, UEs that are paired, i.e., the UE group size is two, should have orthogonal or almost orthogonal channels, so that they cause as little interference as possible to each other. If the two signals can be perfectly separated at the receiver, and both signals are transmitted with the same power as in the single UE case, there is a potential for a 100% cell or UE throughput gain without power increase. However, the radio channel of the paired UEs are seldom ideally orthogonal to each other, which means that the signal of one paired UE may contribute with a relatively large interference to the other one. Thus the interference that one UE experiences after being paired with another UE using MU-MIMO scheduling may be increased quite much compared to if the UEs are not paired, and thus are not MU-MIMO scheduled. Similarly, the interference that one UE experiences after being scheduled in normal FDM may be decreased quite much compared to when the UE is scheduled in pair with another UE. Therefore, MU-MIMO scheduling may cause an abrupt Signal to Interference and Noise Ratio (SINR) variation, which is illustrated in the three graphs in **Figure 3.** The upper left graph, 303, illustrates the uplink bit rate in kilobits per second (kbps) over time for a first UE. The lower left graph, 304, illustrates the SINR for the Physical Uplink Shared Channel (PUSCH) in dB over time for the first UE with a Radio Network Temporary Identifier (RNTI) equal to 242, and the right hand graph, 305, illustrates the SINR for the PUSCH in dB over time for a second UE with a Radio Network Temporary Identifier (RNTI) equal to 134. When the first and the second UE switch from non-MU-MIMO scheduling to MU-MIMO scheduling in pair with each other, which happens at a time indicated by the broken line 301 in all three graphs, the uplink bit rate of the cell increases from around 18000 kbps to around 36000 kbps while the first and the second UEs' SINR are abruptly decreased. This means that the two UEs' transmission power should be increased accordingly to meet the SINR or SINR target requirement. Analogously, the UEs' SINR increase abruptly when the first and second UEs switch from MU-MIMO scheduling in pair to a de-paired non-MU-MIMO scheduling, which happens at a time indicated by the broken line 302 in all three graphs. At de-pairing, the UEs' transmission power should be decreased accordingly in order to generate less interference and to decrease the power consumption by this UE.

The specified power control step size for uplink transmission power control is given by [-1, 0, 1, 3] dB, meaning that the maximum step size is minus 1 dB when the power is to be decreased, and plus 3 dB when the power is to be increased for a UE. In each Round Trip Time (RTT), which corresponds to approximately 5 milliseconds (ms), the power may thus at the most be increased by 3dB or decreased by 1 dB using transmission power control commands. However, the difference between MU-MIMO and non-MU-MIMO SINR in the switch instant is quite large as exemplified with the field test results shown in the graphs of **Figure** 3. Therefore it will take quite some time for the power control to follow the abrupt SINR variation. As may be seen in the graphs of **Figure 3,** the SINR variation may be up to 15 dB. With a step size of +3dB, it would take 5 RTT or 25 ms to adapt the power to the SINR change. Such an abrupt interference or SINR variation may also happen when the scheduler in the RBS changes the partner of one paired UE, e.g. due to changes of radio channel orthogonality between different UEs.

There are currently three different scheduling schemes with different complexity applied for MU-MIMO scheduling:

1. Static scheduling, i.e. the UEs are randomly divided into pairs of two UEs. The pairs persist as long as all UEs remain active.
2. Island scheduling, i.e. UEs are paired with each other only if both of them have a larger estimated throughput compared to non-MU-MIMO scheduling. The estimated throughput is based on an estimated SINR which takes the interference from the other paired UE into account.
3. Proportional Fair in Time and Frequency (PFTF) scheduling, i.e. UEs are paired with each other on resource blocks in which they may have the largest throughput. The scheduling thus considers frequency selectivity in addition to the considerations in scheduling scheme 2 above.

The drawback of scheduling scheme 1 is that the interference between MU-MIMO UEs is not considered when deciding to pair the UEs. The UEs could be paired with each other using MU-MIMO scheduling, even when the decision results in a cell or UE throughput loss compared to non-MU-MIMO scheduling.

The drawback of scheme 2 and 3 is that a UE will experience abrupt interference and SINR variation quite often, as UEs frequently get paired or de-paired or changes their MU-MIMO pair partner. Since power control and/or SINR measurements cannot follow this abrupt SINR quickly enough, the link adaptation may be seriously affected. The link adaptation deterioration may finally result in both UE and cell performance degradation.

**SUMMARY**

The invention is defined by the accompanying independent claims. The dependent claims define implementation aspects of the invention, also known and referred to as embodiments.

It is therefore an object to address some of the problems outlined above, and to provide a solution for improved link adaptation to address the abrupt SINR variations occurring when performing MU-MIMO scheduling. This object and others are achieved by the method and the RBS according to the independent claims, and by the embodiments according to the dependent claims.

According to a first aspect of embodiments, a method in a radio base station of a wireless network for link adaptation at MU-MIMO scheduling comprises scheduling a first UE in pair with a second UE, and predicting a signal to noise and interference value for each of the first and second UE as paired. The method also comprises using the predicted signal to noise and interference values for performing link adaptation for the first and second UE.

According to a second aspect of embodiments, an RBS of a wireless network is configured for link adaptation at MU-MIMO scheduling. The RBS comprises a processing circuit configured to schedule a first UE in pair with a second UE, and to predict a signal to noise and interference value for each of the first and second UE as paired. The processing circuit is also configured to use the predicted signal to noise and interference values for performing link adaptation for the first and second UE.

An advantage of embodiments of the present invention is that the improved link adaptation method makes it possible to select a better suited transport format during MU-MIMO scheduling, which will improve UE and cell performance.

Other objects, advantages and features of embodiments will be explained in the following detailed description when considered in conjunction with the accompanying drawings and claims.

## BRIEF DESCRIPTION OF THE DRAWINGS

**Figure 1** is a schematic illustration of a radio access network in LTE.
**Figure 2** is a schematic illustration of MU-MIMO scheduling.
**Figure 3** shows three graphs illustrating bit rate and SINR variations at MU-MIMO scheduling according to a field test result.
**Figures 4a-4c** are flowcharts illustrating the method in an RBS according to embodiments.
**Figure 5** is a block diagram schematically illustrating an RBS according to embodiments.

## DETAILED DESCRIPTION

In the following, different aspects will be described in more detail with references to certain embodiments of the invention and to accompanying drawings. For purposes of explanation and not limitation, specific details are set forth, such as particular scenarios and techniques, in order to provide a thorough understanding of the different embodiments. However, other embodiments that depart from these specific details may also exist.

Moreover, those skilled in the art will appreciate that the functions and means explained herein below may be implemented using software functioning in conjunction with a programmed microprocessor or general purpose computer, and/or using an application specific integrated circuit (ASIC). It will also be appreciated that while embodiments of the invention are primarily described in the form of methods and nodes, they may also be embodied in a computer program product as well as in a system comprising a computer processor and a memory coupled to the processor, wherein the memory is encoded with one or more programs that may perform the functions disclosed herein.

Embodiments are described in a non-limiting general context in relation to an example scenario with MU-MIMO in an LTE network with up to two UEs scheduled simultaneously. However, it should be noted that embodiments may also be applied when more than two UEs are co-scheduled, i.e., scheduled over the same time-frequency resources. Embodiments may also be applied to any radio access network technology similar to an E-UTRAN implementing MU-MIMO scheduling, such as Code Division Multiple Access (CDMA) 2000, WIMAX, Wideband CDMA (WCDMA), and Time Division (TD) CDMA.

The problem of bad UE or cell performance due to a link adaptation that deteriorates at MU-MIMO scheduling, is addressed by a solution where the RBS predicts the SINR of a UE as paired, when the UE is scheduled in pair with another UE. The link adaptation is based on the predicted SINR. In this way the changed interference situation which is due to the MU-MIMO scheduling is taken into account when determining the transport format. The link adaptation is thus adapted to the coming interference situation.

Furthermore, embodiments of the present invention relates to two complementary procedures to address the problem of the SINR variance in case of MU-MIMO scheduling:

1. Adapted power control: In embodiments of the invention, the power control is optimized for paired and de-paired scheduling so that the UE transmit power can follow the SINR or interference variation more quickly. A fast adjustment of the UE transmission power makes it possible to avoid or at least reduce the extra interference generated in a neighbor cell at a MU-MIMO scheduling.

2. Improved MU-MIMO scheduling: A cautious UE pairing and de-pairing scheduling scheme is disclosed. The object is to reduce the frequency of abrupt interference or SINR variation occurrences due to MU-MIMO scheduling. The proposed scheduling procedure helps reducing the frequency by using thresholds for deciding when to pair or de-pair the UEs.

The improved MU-MIMO link adaptation solution briefly described above and more thoroughly described hereinafter may be combined with either the adapted power control described under 1 above, or with the improved MU-MIMO scheduling described under 2 above, or with both of them. The adapted power control and the improved scheduling procedure are also more thoroughly described below.

Improved MU-MIMO link adaptation

When a scheduler in an RBS intends to switch UEs from paired to de-paired scheduling or vice versa, or to change a pair partner of a UE during MU-MIMO scheduling, the resulting SINR variation cannot be captured quickly enough by the current measurement module due to measurement delays and filtering of the SINR measurement. More specifically, the reported SINR from Layer 1 (L1) at time t that the link adaptation is based on cannot reflect the actual SINR that a UE experienced at time t+K, where K is typically equal to or larger than 4 ms. This is due to the delay counted from the time instant when an uplink grant is sent, to the time instant when the UE actually transmits. This may result in either a too aggressive transport format selection when switching from de-paired to paired scheduling, or in a too conservative transport format selection when switching from paired to de-paired scheduling.

Therefore, in embodiments of the invention, the link adaptation is performed based on a predicted SINR instead of the SINR measured by L1 at the time of the scheduling action. The SINR is predicted in different ways depending on if the interference change is caused by a UE pairing, de-pairing, or pair partner change. The method to predict the SINR may be different for different receivers. A simple method to estimate the SINR of a UE when it is going to be paired with another UE, when an MRC receiver is used, may be exemplified with the following equation:

$$SINR_{UEi} = \frac{P_{rx,UEi}}{\gamma P_{rx,UEi} + \beta P_{rx,UEj} + I_{other}} \qquad [1]$$

where $UE_j$ is paired with $UE_i$, $\gamma$ (0-1) is the coefficient of self-interference, $\beta$ (0-1) is the coefficient of the interference from the paired UE, and $I_{other}$ comprises the thermal noise and the interference from other UEs that are not scheduled in pair with $UE_i$. Furthermore, $P_{rx,UEi}$ and $P_{rx,UEj}$ are the received power for $UE_i$ and $UE_j$ respectively. $\gamma$ and $\beta$ may either be dynamically calculated according to the radio conditions, or they may correspond to well tuned pre-determined values.

Once the L1 SINR measurement is accurate enough, the traditional link adaption may be used.

One example embodiment of this new link adaptation procedure is given hereinafter. In the following, SINR is used as a short version of PUSCH SINR:

1. At time instance t1, the scheduler wants to pair UE a and UE b which have not been working in paired mode previously. At this time instance the SINR of each of the UEs is $SINR_{a\_meas}$ and $SINR_{b\_meas}$ respectively.

2. Instead of using $SINR_{a\_meas}$ and $SINR_{b\_meas}$ for link adaptation, the scheduler predicts a SINR for each UE as paired. Assuming that $SINR_{a\_pred}$ and $SINR_{b\_pred}$ are the predicted SINR values for the two UEs, $SINR_{a\_pred}$ and $SINR_{b-pred}$ are used for the link adaptation instead of the measured SINR values. The SINR values may be predicted for the newly paired UEs and used in the corresponding link adaption until the first measured SINRs corresponding to the paired transmission for the two UEs are available.

3. At time t2, the first measured SINRs corresponding to the paired transmission of user a and b are available. The measured SINRs are set as filtered SINRs for UE a and UE *b* respectively, and these measured SINRs are used for the link adaptation. After t2, the filtered SINRs are used directly in the link adaptation for the two paired UEs respectively.

4. At time instance t3, the scheduler decides to de-pair UE a and UE b, and the current measured SINRs for the two UEs are $SINR_{a\_meas\_3}$ and $SINR_{b\_meas\_3}$ respectively.

5. Instead of using $SINR_{a-meas-3}$ and $SINR_{b-meas\_3}$ for link adaptation, the scheduler predicts the SINR for each UE as de-paired. If $SINR_{a-pred-3}$ and $SINR_{b-pred-3}$ are the predicted de-paired SINRs for the two UEs, $SINR_{a-pred-3}$

and $SINR_{b-pred-3}$ are used for the link adaptation. The predicted SINRs for the de-paired transmission of the two UEs are used in link adaptation until the first measured SINR corresponding to the de-paired transmission of the two UEs is available, and the corresponding SINR filters of the two UEs are reset accordingly.

Adapted MU-MIMO power control

As already briefly mentioned in the background section, the conventional power adjustment range of each power control step is given by the step size configuration [-1,0,1, 3] dB. However, the difference between expected SINR and true SINR is quite large at a point in time when the UE is scheduled from paired to de-paired or the opposite. It may take several RTTs to reach the SINR target or the required SINR. The problem is more severe when the UE switches from scheduled in pair to scheduled alone, as it takes longer time to decrease than to increase the UE transmission power since the maximum step for decreasing is only minus 1dB. Excessively high transmission power during the switch from paired scheduling to de-paired scheduling results in a high interference to neighbor cells. It would therefore be advantageous to provide a faster UE transmission power adjustment to reach a reasonable power level in shorter time, as that minimizes the interference generated in neighbor cells.

According to prior art, the UE transmission power is calculated according to the following equation:

$$UE\_TX\_power = P_0 + \alpha * PL_{DL} + \Delta_{MCS} + 10 * \log_{10}(M) + f(\Delta_{TPC}) \qquad [2]$$

*UE_TX_power* is the adjusted UE transmission power, $P_0$ is the desired or target received power per resource block at eNodeB, $\Delta_{MCS}$ is the modulation and coding scheme used for current PUSCH transmission, M is the number of resource blocks used for current PUSCH transmission, $f(\Delta_{TPC})$ is an accumulated Transmission Power Control (TPC) command sent from the eNodeB to the UE, $PL_{DL}$ is a downlink path loss between the eNodeB and the UE, and $\alpha$ is a path loss compensation factor.

In embodiments, a special power adaptation parameter is used for adapting the power control equation [2] to a MU-MIMO scheduling case, such that the power may be adjusted to the abrupt SINR changes immediately. The following three alternative embodiments of the power control method are provided:

A. In a first step, a special power adaptation parameter for uplink transmission power control, such as the special power offset in the first embodiment described below, or the special power step size in the second embodiment described below, are transmitted to a UE e.g. using Radio Resource Control (RRC) signaling. In a second step, the eNodeB indicates to the UE that the UE is going to be paired or de-paired with another UE. This indication may be sent to the UE in a MAC CE or in a Physical Downlink Control Channel (PDCCH). In a third step, the UE adjusts its power control using the special power adaptation parameter.

B. In this embodiment, the eNodeB and the UE are configured to use a pre-defined power adaptation parameter, which means that the first step described in embodiment A is not needed in this embodiment. Embodiment B thus comprises the second and the third steps described in embodiment A, of the UE receiving an indication from the eNodeB and adjusting the power control accordingly.

C. In this embodiment, the step of the eNodeB sending a special power adaptation parameter is performed when the eNodeB plans to pair or de-pair the UE. The transmission of the special power adaptation parameter also serves as the indication for adjusting the power control. Once the UE receives the special power adaptation parameter e.g. in RRC signaling, the UE will apply the special power adaptation parameter directly for adjusting the power control. The transmission of the special power adaptation parameter thus serves both as the indication to apply the special power control adapted for MU-MIMO pairing or de-pairing, and as the value of the power adaptation parameter to use for the special power control.

In a first embodiment of the present invention, the special power adaptation parameter comprises new power offsets. The new power offsets are introduced in addition to the normal power control, to compensate for the sudden interference change. These new power offsets can be introduced in Equation [2] to calculate the UE transmission power when transmitting the first subframe after the users are scheduled paired or de-paired, according to the following:

$$UE\_TX\_power = \begin{cases} P_0 + \alpha * PL_{DL} + \Delta_{MCS} + 10 * \log_{10}(M) + f(\Delta_{TPC} + \Delta_{Pair}) & paired \\ P_0 + \alpha * PL_{DL} + \Delta_{MCS} + 10 * \log_{10}(M) + f(\Delta_{TPC} - \Delta_{Depair}) & depaired \end{cases} \qquad [3]$$

$\Delta_{Pair}$, $\Delta_{Depair}$ may e.g. be defined as new information in the existing Information Element (IE) *UplinkPowerControlDedicated.* The information in the IE may thus be used to compensate for special power requirements valid during a change of scheduling from MU-MIMO pairing to de-pairing or vice versa. The new power offsets may be conveyed to the UE in dedicated RRC signaling, according to embodiment A described above. The new power offsets may alternatively be pre-defined, in accordance with embodiment B above.

The scheduler in the RBS thus notifies the UE to calculate the transmission power using the lower part of equation [3], when one UE is to be scheduled from paired to de-paired. This may e.g. be done by indicating to the UE that it is to be scheduled from paired to de-paired in a Media Access Control (MAC) Control Element (CE). The UE will then know what power offset to use in equation [3] when it calculates the transmission power. In this way, the interference caused by this UE to neighbor cells is reduced immediately, and the SINR may approximately meet the SINR target immediately as well.

Analogously, when one UE is to be scheduled from de-paired to paired, the scheduler notifies the UE to calculate the total transmit power using the upper part of equation [3]. In this way, the UE can quickly increase its power and meet the abruptly changed SINR requirement at once.

The UE may apply Equation [3] to calculate the transmission power at the specific subframe corresponding to the MAC CE with the indication from the eNodeB. If there is a remaining mismatch between the resulting SINR and the SINR target, the mismatch may be easily compensated by the normal power control procedure.

In a second embodiment, the special power adaptation parameter comprises a new step size configuration. A large step size may be pre-defined or configured to handle the large SINR variation due to MU-MIMO pairing or de-pairing, and a small step size may be pre-defined or configured for a stable situation without MU-MIMO scheduling changes. In one example embodiment, a step size table given by [-y,-x, x, y] dB is used, where x is configured or pre-defined to be between 0.5 and 1, to allow for adjustments to the small SINR changes, while y can be configured or pre-defined to be between 3 and 5 to allow for adjustments to the large SINR changes occurring at MU-MIMO scheduling changes. The TPC command may be sent to the UE at a number D of subframes in advance of the subframe when the de-pairing or pairing action occurs, where D is the TPC delay. This allows for an even faster adjustment of the power so that the impact of the SINR variation is minimized.

Such a new step size configuration may be either broadcasted in an uplink MU-MIMO capable system for all UEs, or it may be sent to some dedicated UEs that have a high possibility to be scheduled in MU-MIMO mode via RRC signaling or other commands or orders.

Improved MU-MIMO scheduling

As mentioned above, abrupt interference or SINR variation occurs when a UE switches between paired scheduling and non-paired scheduling, or switches to another pair partner during paired scheduling. Therefore the UE pairing and de-pairing in MU-MIMO scheduling should be done more cautiously to avoid frequent SINR variations. The criterions for cautious MU-MIMO scheduling are:

1. One UE can only be scheduled in pair with another UE when the estimated throughput gain of the two UEs scheduled in pair relative to the two UEs scheduled unpaired is higher than a certain threshold called ThresA, and when both UEs individually get a positive throughput gain by being paired. ThresA may in one exemplary embodiment be the x-th percentile, e.g. the 50th percentile.

2. Two paired UEs can only be de-paired when the estimated throughput gain of the two UEs scheduled in pair relative to the two UEs scheduled unpaired is lower than another threshold called ThresB, or one of the paired UEs can get a higher throughput when not paired. ThresB may in an exemplary embodiment be the y-th percentile, e.g. the 20-th percentile.

3. Paired UEs can only change pair partner when the estimated throughput gain of the new pair relative to the original pair is higher than certain pre-determined threshold called ThresC. ThresC may in an exemplary embodiment be the z-th percentile, e.g. the 20-th percentile. As an example, a UE *a* - paired with a UE *b* - may only change pair partner to UE *c* if the estimated throughput gain of the pair UE *a* + UE *c* is higher than that of the UE pair UE *a* + UE *b.*

The throughput may be estimated based on an uplink channel and the uplink power headroom of the UEs. The thresholds ThresA, ThresB, and ThresC may be tuned based on either simulations or field tests.

Furthermore, to avoid triggering a UE pairing, de-pairing, or pair partner change at an instant radio channel peak or dip, an attack-decay filter may be applied to the calculated throughput gain given by the following equation:

$$gainThp(n) = gainThp_{inst} \cdot \alpha + gainThp(n-1) \cdot (1-\alpha) \qquad [4]$$

$gainThp(n)$ is the filtered throughput gain in the present Transmission Time Interval (TTI); $gainThp_{inst}$ is the estimated throughput gain in the present TTI; $\alpha$ is the filter coefficient which may take a value from 0 to 1 and which should be tuned; $gainThp(n-1)$ is the filtered throughput gain in the previous TTI.

The procedure for the improved MU-MIMO scheduling may thus comprise a first step where the system estimates the throughput gain of a paired scheduling relative to a de-paired scheduling for each possible UE pair or for the UE pair that is being scheduled, and a second step where the RBS pairs, de-pairs, or changes pair partners according to the criterions mentioned above under bullets 1, 2 and 3.

An advantage of these scheduling procedure embodiments is that the impact due to the abrupt SINR variation is well considered during the MU-MIMO scheduling. Unnecessary MU-MIMO scheduling actions such as pairing, de-pairing, pair partner changes are thus avoided. As a consequence, the frequency of the abrupt SINR variation is reduced, which in turn alleviates the burden on the link adaptation.

Embodiments of method and node

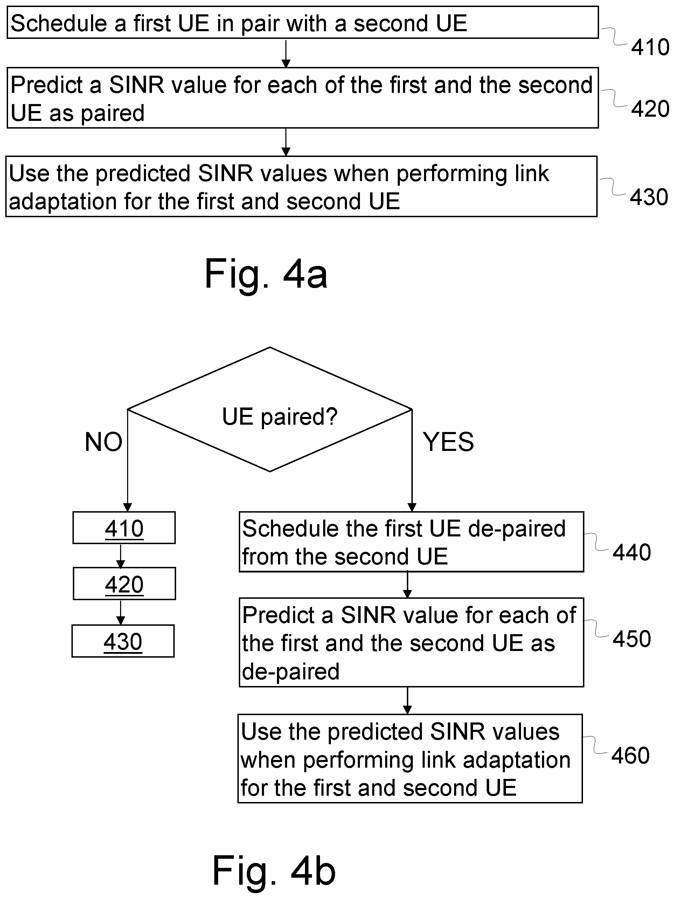

**Figure 4a** is a flowchart illustrating an embodiment of a method in an RBS of a wireless network, for link adaptation at MU-MIMO scheduling. The method comprises:

- 410: Scheduling a first UE in pair with a second UE.

- 420: Predicting a SINR value for each of the first and second UE as paired.

- 430: Using the predicted SINR values for performing link adaptation for the first and second UE.

The predicted SINR values may be used for performing link adaptation until measured SINR values are available for each of the first and second UE when they are paired. The link adaptation procedure will at that time thus be the same as the conventional link adaptation.

**Figure 4b** is a flowchart illustrating another embodiment of the method in the RBS. The method comprises in addition to the steps 410, 420 and 430 described above also the following when the first UE is paired with the second UE:

- 440: Scheduling the first UE de-paired from the second UE.

- 450: Predicting a SINR value for each of the first and second UE as de-paired.

- 460: Using the predicted SINR values for performing link adaptation for the first and second UE. In this embodiment, the SINR will be decreased when the UEs are de-paired, and SINR values predicted for un-paired UEs are used for the link adaptation to avoid a too conservative transport format.

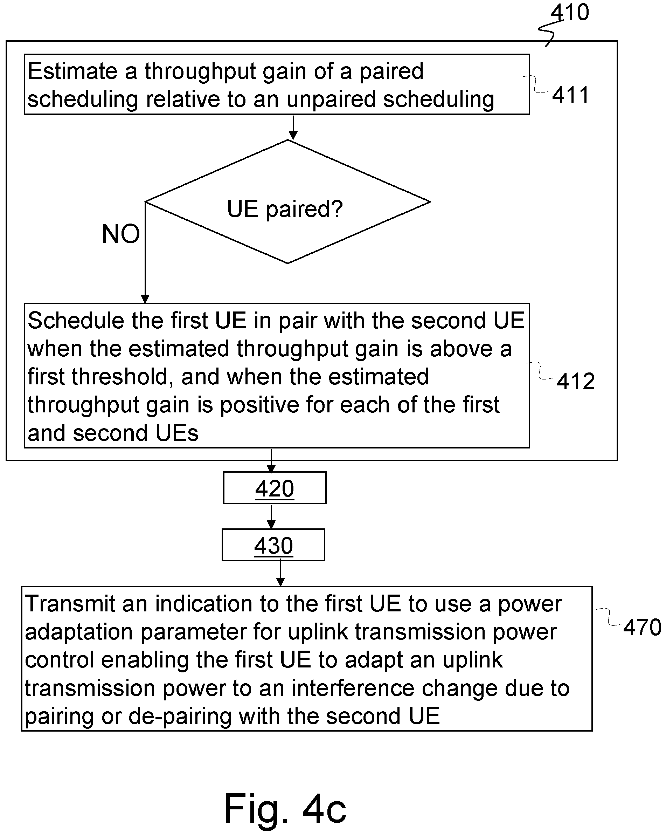

Also here the predicted SINR values may be used for performing link adaptation until measured SINR values are available for each of the first and second UE when they are de-paired.
The improved link adaptation procedure described above may also be combined with the improved scheduling procedure, as illustrated in the flowchart of **Figure 4c.** In one embodiment, the scheduling (410) of the first UE in pair with the second UE comprises:

- 411: Estimating a throughput gain of a paired scheduling relative to an unpaired scheduling for a UE pair comprising the first UE and the second UE, and for each of the first and the second UEs individually. The method may further comprise applying an attack-decay filter when estimating the throughput gain, in order to avoid triggering a scheduling change due to instant radio channel peaks or dips.

- 412: Scheduling the first UE in pair with the second UE when the estimated throughput gain for the UE pair is above a first threshold, and when the estimated throughput gain is positive for each of the first and second UEs. The first threshold is referred to as ThreshA in the description above.

Steps 411 and 412 are performed if the first UE was initially unpaired. However, in another embodiment the first UE may initially be paired with another UE than the second UE, and the first UE is in this case re-paired with the second UE instead of this other previous UE. The scheduling (410) of the first UE in pair with the second UE will in this embodiment comprise:

- Estimating a further throughput gain for a paired scheduling for a UE pair comprising the first UE and the second UE relative to a UE pair comprising the first UE and the previous UE.

- Scheduling the first UE in pair with the second UE when the further throughput gain is higher than a third threshold. The third threshold is referred to as ThresC in the description above, and may in one exemplary embodiment be the 20th percentile.

Furthermore, the scheduling (440) of the first UE de-paired from the second UE may comprise:

- Estimating a throughput gain of a paired scheduling relative to an unpaired scheduling for a UE pair comprising the first UE and the second UE, and for each of the first and the second UEs individually.

- Scheduling the first UE de-paired from the second UE when the estimated throughput gain for the UE pair is lower than a second threshold, or when the estimated throughput gain is negative for either the first or the second UE.

The adapted power control procedure described above may also be combined with any of the above described embodiment, as illustrated in the flowchart in **Figure 4c.** The method in the RBS may thus further comprise in addition to steps 411, 412, 420, and 430:

- 470: Transmitting an indication to the first UE to use a power adaptation parameter for uplink transmission power control. The power adaptation parameter enables the first UE to adapt an uplink transmission power to an interference change due to pairing or de-pairing with the second UE.

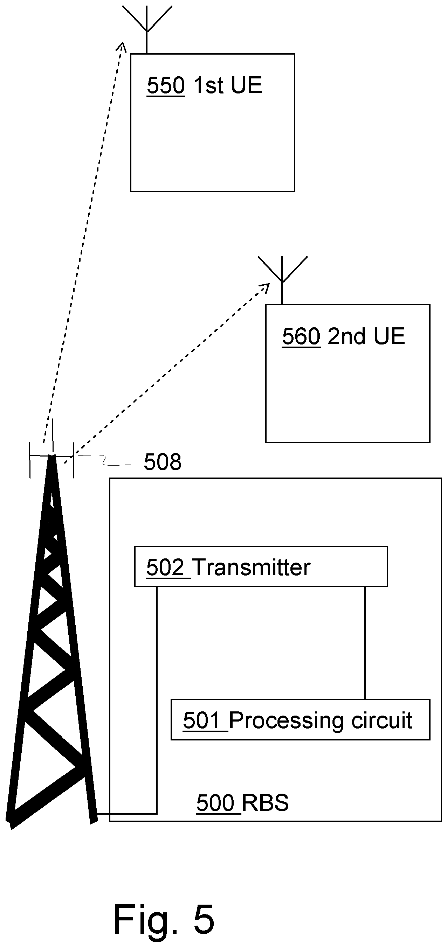

In accordance with embodiment A described above in the section "Adapted MU-MIMO power control", the method further comprises transmitting the power adaptation parameter to the first UE before transmitting the indication.
In accordance with embodiment C described above in the section "Adapted MU-MIMO power control", transmitting the indication in 480 comprises transmitting the power adaptation parameter to the first UE. The transmission of the special power adaptation parameter thus serves both as the indication to apply the special power control, and as the value of the power adaptation parameter to use for the special power control.
According to one embodiment referred to as the first embodiment in the section describing the adapted power control, the power adaptation parameter comprises a positive power step size for uplink transmission power control when the first UE is scheduled in pair with the second UE, and a negative power step size for uplink transmission power control when the first UE is scheduled de-paired from the second UE. According to another embodiment referred to as the second embodiment in the section describing the adapted power control, the power adaptation parameter comprises a first transmission power offset for uplink transmission power control when the first UE is scheduled in pair with the second UE, and a second transmission power offset for uplink transmission power control when the first UE is scheduled de-paired from the second UE.
An embodiment of an RBS 500 is schematically illustrated in the block diagram in **Figure 5**. The RBS 500 is configured for link adaptation at MU-MIMO scheduling. The RBS 500 comprises a processing circuit 501 configured to schedule a first UE 550 in pair with a second UE 560, and to predict a SINR value for each of the first and second UE as paired. The processing circuit 501 is also configured to use the predicted SINR values for performing link adaptation for the first and second UE.
In another embodiment, the processing circuit 501 is further configured to schedule the first UE de-paired from the second UE, and to predict a SINR value for each of the first and second UE as de-paired. The processing circuit 501 is also configured to use these predicted SINR values for performing link adaptation for the first and second UE.
The processing circuit 501 may be configured to use the predicted SINR values for performing link adaptation until measured signal to noise and interference values are available for each of the first and second UE when they are paired or de-paired.
When adding the improved scheduling, the processing circuit 501 may be configured to schedule the first UE in pair with the second UE by being configured to estimate a throughput gain of a paired scheduling relative to an unpaired scheduling for a UE pair comprising the first UE and the second UE, and for each of the first and the second UEs individually. Furthermore, the processing circuit 501 may be configured to schedule the first UE in pair with the second UE by being configured to schedule the first UE in pair with the second UE when the estimated throughput gain for the UE pair is above a first threshold, and when the estimated throughput gain is positive for each of the first and second UEs. The first threshold is also referred to as ThreshA above.
Furthermore, in one embodiment the processing circuit 501 may be configured to schedule the first UE de-paired from the second UE by being configured to estimate a throughput gain of a paired scheduling relative to an unpaired scheduling for a UE pair comprising the first UE and the second UE, and for each of the first and the second UEs individually. Furthermore, the processing circuit 501 may be configured to schedule the first UE de-paired from the second UE when the estimated throughput gain for the UE pair is lower than a second threshold, or when the estimated throughput gain is negative for either the first or the second UE. The second threshold is also referred to as ThreshB above.
When adding the adapted power control, the RBS may further comprise a transmitter 502 configured to transmit an indication to the first UE 550 to use a power adaptation parameter for uplink transmission power control. The power adaptation parameter enables the first UE to adapt an uplink transmission power to an interference change due to pairing or de-pairing with the second UE 560. The transmitter 502 may be connected to one or more transmitting antennas 508. The transmitter 502 may be further configured to transmit the power adaptation parameter to the first UE before transmitting the indication, in accordance with embodiment A described above in the section "Adapted MU-MIMO power control". The transmitter 502 may be further configured to transmit the indication by transmitting the power adaptation parameter to the first UE, in accordance with embodiment C described above in the section "Adapted MU-MIMO power control".
According to one embodiment referred to as the first embodiment in the section describing the adapted power control, the power adaptation parameter comprises a positive power step size for uplink transmission power control when the first UE is scheduled in pair with the second UE, and a negative power step size for uplink transmission power control when the first UE is scheduled de-paired from the second UE. According to another embodiment referred to as the second embodiment in the section describing the adapted power control, the power adaptation parameter comprises a first transmission power offset for uplink transmission power control when the first UE is scheduled in pair with the second UE, and a second transmission power offset for uplink transmission power control when the first UE is scheduled de-paired from the second UE.

The processing circuit and the transmitter described above with reference to **Figure 5** may be logical units, separate physical units or a combination of both logical and physical units.

In an alternative way to describe the embodiments in **Figure 5,** the RBS 500 comprises a Central Processing Unit (CPU) which may be a single unit or a plurality of units. Furthermore, the RBS 500 comprises at least one computer program product (CPP) in the form of a non-volatile memory, e.g. an EEPROM (Electrically Erasable Programmable Read-Only Memory), a flash memory or a disk drive. The CPP comprises a computer program, which comprises code means which when run on the RBS 500 causes the CPU to perform steps of the procedures described earlier in conjunction with **Figures 4a-c**. In other words, when said code means are run on the CPU, they correspond to the processing circuit 501 of **Figure 5.**

The above mentioned and described embodiments are only given as examples and should not be limiting. Other solutions, uses, objectives, and functions within the scope of the accompanying patent claims may be possible.

**Claims**

1. A method performed by a radio base station of a wireless network, for link adaptation at Multiple User Multiple-Input-Multiple-Output scheduling in an uplink, UL, wherein the method comprises:

   - scheduling (410) a first User Equipment, UE, in pair with a second UE, wherein the scheduling (410) of the first UE in pair with the second UE comprises:

     - estimating (411) a throughput gain of a paired scheduling relative to an unpaired scheduling for a UE pair comprising the first UE and the second UE, and a throughput gain for each of the first and the second UEs individually, and
     - scheduling (412) the first UE in pair with the second UE when the estimated throughput gain of the paired scheduling relative to the unpaired scheduling for the UE pair is above a first threshold, and

   when the estimated throughput gain for each of the first and second UEs individually is positive;

     - predicting (420) a signal to noise and interference value for each of the first and second UE as paired, and
     - using (430) the predicted signal to noise and interference values for performing link adaptation for the first and second UE.

2. The method according to claim 1, wherein the predicted signal to noise and interference values are used for performing link adaptation until measured signal to noise and interference values are available for each of the first and second UE when they are paired.

3. The method according to any of the preceding claims, further comprising when the first UE is paired with the second UE:

     - scheduling (440) the first UE de-paired from the second UE,
     - predicting (450) a signal to noise and interference value for each of the first and second UE as de-paired, and
     - using (460) the predicted signal to noise and interference values for performing link adaptation for the first and second UE.

4. The method according to claim 3, wherein the predicted signal to noise and interference values for each of the first and second UE as de-paired are used for performing link adaptation until measured signal to noise and interference values are available for each of the first and second UE when they are de-paired.

5. The method according to any of claims 3-4, wherein the scheduling (440) of the first UE de-paired from the second UE comprises:

- estimating a throughput gain of a paired scheduling relative to an unpaired scheduling for a UE pair comprising the first UE and the second UE, and for each of the first and the second UEs individually, and
- scheduling the first UE de-paired from the second UE when the estimated throughput gain for the UE pair is lower than a second threshold, or when the estimated throughput gain is negative for either the first or the second UE.

6. The method according to any of the preceding claims, further comprising:

- transmitting (470) an indication to the first UE to use a power adaptation parameter for uplink transmission power control, which power adaptation parameter enables the first UE to adapt an uplink transmission power to an interference change due to pairing or de-pairing with the second UE.

7. The method according to claim 6, further comprising transmitting the power adaptation parameter to the first UE before transmitting the indication.

8. The method according to claim 6, wherein transmitting (470) the indication comprises transmitting the power adaptation parameter to the first UE.

9. The method according any of claims 6-8, wherein the power adaptation parameter comprises a positive power step size for uplink transmission power control when the first UE is scheduled in pair with the second UE, and a negative power step size for uplink transmission power control when the first UE is scheduled de-paired from the second UE.

10. The method according to any of claims 6-8, wherein the power adaptation parameter comprises a first transmission power offset for uplink transmission power control when the first UE is scheduled in pair with the second UE, and a second transmission power offset for uplink transmission power control when the first UE is scheduled de-paired from the second UE.

11. A radio base station (500) of a wireless network, configured for link adaptation at Multiple User Multiple-Input-Multiple-Output scheduling in an uplink, UL, adapted to perform the method steps of claim 1.

12. The radio base station according to claim 11, wherein the processing circuit (501) is further configured to:

- schedule the first UE de-paired from the second UE,
- predict a signal to noise and interference value for each of the first and second UE as de-paired, and
- use the predicted signal to noise and interference values for performing link adaptation for the first and second UE.

13. The radio base station according to any of claims 11-12, wherein the processing circuit (501) is configured to use the predicted signal to noise and interference values for performing link adaptation until measured signal to noise and interference values are available for each of the first and second UE when they are paired or de-paired.

14. The radio base station according to any of claims 11-13, wherein the processing circuit (501) is configured to schedule the first UE de-paired from the second UE by being configured to:

- estimate a throughput gain of a paired scheduling relative to an unpaired scheduling for a UE pair comprising the first UE and the second UE, and for each of the first and the second UEs individually, and
- schedule the first UE de-paired from the second UE when the estimated throughput gain for the UE pair is lower than a second threshold, or when the estimated throughput gain is negative for either the first or the second UE.

15. The radio base station according to any of claims 11-14, further comprising a transmitter (502) configured to transmit an indication to the first UE to use a power adaptation parameter for uplink transmission power control, which power adaptation parameter enables the first UE to adapt an uplink transmission power to an interference change due to pairing or de-pairing with the second UE

16. The radio base station according to claim 15, wherein the transmitter (502) is further configured to transmit the power adaptation parameter to the first UE before transmitting the indication.

17. The radio base station according to claim 15, wherein the transmitter (502) is further configured to transmit the indication by transmitting the power adaptation parameter to the first UE.

18. The radio base station according any of claims 15-17, wherein the power adaptation parameter comprises a positive power step size for uplink transmission power control when the first UE is scheduled in pair with the second UE, and a negative power step size for uplink transmission power control when the first UE is scheduled de-paired from the second UE.

19. The radio base station according to any of claims 15-17, wherein the power adaptation parameter comprises a first transmission power offset for uplink transmission power control when the first UE is scheduled in pair with the second UE, and a second transmission power offset for uplink transmission power control when the first UE is scheduled de-paired from the second UE.

**Patentansprüche**

1. Verfahren, durchgeführt durch eine Radiobasisstation eines drahtlosen Netzwerks zur Verbindungsanpassung an Multiple-Input-Multiple-Output-Planung für mehrere Benutzer in einer Aufwärtsverbindung (Uplink - UL), wobei das Verfahren Folgendes umfasst:

- Planung (410) eines ersten Benutzergeräts (User Equipment - UE) paarweise mit mit einem zweiten UE, wobei die Planung (410) des ersten UE paarweise mit dem zweiten UE Folgendes umfasst:
- Schätzen (411) einer Durchsatzverstärkung einer gepaarten Planung relativ zu einer ungepaarten Planung für ein UE-Paar, das das erste UE und das zweite UE umfasst, und einer Durchsatzverstärkung für jedes der ersten und zweiten UEs einzeln, und
- Planung (412) des ersten UEs gepaart mit dem zweiten UE, wenn die geschätzte Durchsatzverstärkung der gepaarten Planung relativ zu der ungepaarten Planung für das UE-Paar über einem ersten Schwellenwert liegt, und wenn die geschätzte Durchsatzverstärkung für jedes des ersten und des zweiten UE einzeln positiv ist;
- Vorhersagen (420) eines Signal-Rausch-und-Interferenz-Werts für jedes des ersten und zweiten UE wie gepaart, und
- Verwenden (430) der vorhergesagten Signal-Rausch-und-Interferenz-Werte zum Ausführen von Verbindungsanpassung für das erste und zweite UE.

2. Verfahren nach Anspruch 1, wobei die vorhergesagten Signal-Rausch-und-Interferenz-Werte zum Durchführen von Verbindungsanpassung verwendet werden, bis die gemessenen Signal-Rausch-und-Interferenz-Werte für jedes des ersten und zweiten UE erhältlich sind, wenn sie gepaart sind.

3. Verfahren nach einem der vorhergehenden Ansprüche, das ferner Folgendes umfasst, wenn das erste UE mit dem zweiten UE gepaart ist:

- Planung (440) des ersten UE, entpaart von dem zweiten UE,
- Vorhersagen (450) eines Signal-Rausch-und-Interferenz-Werts für jedes des ersten und zweiten UEs wie entpaart, und
- Verwenden (460) der vorhergesagten Signal-Rausch-und-Interferenz-Werten zum Durchführen von Anschlussanpassung für das erste und zweite UE.

4. Verfahren nach Anspruch 3, wobei die vorhergesagten Signal-Rausch-und-Interferenz-Werte für jedes des ersten und zweiten UE wie entpaart zum Durchführen von Verbindungsanpassungen verwendet werden, bis gemessene Signal-Rausch-und-Interferenz-Werte für jedes des ersten und zweiten UE verfügbar sind, wenn sie entpaart sind.

5. Verfahren nach einem der Ansprüche 3-4, wobei die Planung (440) des ersten UE entpaart von dem zweiten UE Folgendes umfasst:

- Schätzen einer Durchsatzverstärkung einer gepaarten Planung relativ zu einer ungepaarten Planung für ein UE-Paar, das das erste UE und das zweite UE umfasst, und für jedes des ersten und zweiten UE einzeln, und
- Planung des ersten UE entpaart von dem zweiten UE, wenn die geschätzte Durchsatzverstärkung für das UE-Paar niedriger ist als ein zweiter Schwellenwert oder wenn die geschätzte Durchsatzverstärkung negativ für entweder das erste oder zweite UE ist.

6. Verfahren nach einem der vorhergehenden Ansprüche, das ferner Folgendes umfasst:

   - Senden (470) einer Angabe an das erste UE, einen Leistungsanpassungsparameter zur Sendeleistungssteuerung für die Aufwärtsverbindung zu verwenden, wobei die Leistungsanpassungsparameter dem ersten UE ermöglichen, eine Sendeleistung für die Aufwärtsverbindung an eine Interferenzänderung durch Paaren oder Entpaaren mit dem zweiten UE anzupassen.

7. Verfahren nach Anspruch 6, das ferner das Senden des Leistungsanpassungsparameters an den ersten UE vor dem Senden der Angabe umfasst.

8. Verfahren nach Anspruch 6, wobei das Senden (470) der Angabe das Senden des Leistungsanpassungsparameters an den ersten UE umfasst.

9. Verfahren nach einem der Ansprüche 6-8, wobei der Leistungsanpassungsparameter eine positive Leistungsschrittgröße für Sendeleistungssteuerung für die Aufwärtsverbindung umfasst, wenn das erste UE paarweise mit dem zweiten UE geplant ist, und eine negative Leistungsschrittgröße für Sendeleistungssteuerung für die Aufwärtsverbindung, wenn das erste UE entpaart von dem zweiten UE geplant ist.

10. Verfahren nach einem der Ansprüche 6-8, wobei der Leistungsanpassungsparameter einen ersten Sendeleistungs-Offset für Sendeleistungssteuerung für die Aufwärtsverbindung umfasst, wenn das erste UE paarweise mit dem zweiten UE geplant ist, und einen zweiten Sendeleistungs-Offset für Sendeleistungssteuerung für die Aufwärtsverbindung, wenn das erste UE entpaart von dem zweiten UE geplant ist.

11. Radiobasisstation (500) eines drahtlosen Netzwerks, die zur Verbindungsanpassung an Multiple-Input-Multiple-Output-Planung für mehrere Benutzer in einer Aufwärtsverbindung (Uplink, UL) konfiguriert ist, und die dazu ausgebildet ist, um die Verfahrensschritte nach Anspruch 1 durchzuführen.

12. Radiobasisstation nach Anspruch 11, wobei die Verarbeitungsschaltung (501) ferner konfiguriert ist, zum:

   - Planen des ersten UE entpaart von dem zweiten UE,
   - Vorhersagen eines Signal-Rausch-und-Interferenz-Werts für jedes des ersten und zweiten UE wie entpaart, und
   - Verwenden der vorhergesagten Signal-Rausch-und-Interferenz-Werte zum Durchführen von Verbindungsanpassung für das erste und das zweite UE.

13. Radiobasisstation nach einem der Ansprüche 11-12, wobei die Verarbeitungsschaltung (501) konfiguriert ist, um die vorhergesagten Signal-Rausch-und-Interferenz-Werte zum Durchführen von Verbindungsanpassung zu verwenden, bis gemessene Signal-Rausch-und-Interferenz-Werte für jedes des ersten und zweiten UE verfügbar sind, wenn sie gepaart oder entpaart sind.

14. Radiobasisstation nach einem der Ansprüche 11-13, wobei die Verarbeitungsschaltung (501) konfiguriert ist, den ersten UE, entpaart von dem zweiten UE, zu planen, indem sie konfiguriert ist zum:

   - Schätzen einer Durchsatzverstärkung einer gepaarten Planung relativ zu einer ungepaarten Planung für ein UE-Paar, das das erste UE und das zweite UE umfasst, und für jedes des ersten und des zweiten UE einzeln, und
   - Planen des ersten UE entpaart von dem zweiten UE, wenn die geschätzte Durchsatzverstärkung für das UE-Paar niedriger ist als ein zweiter Schwellenwert, oder wenn die geschätzte Durchsatzverstärkung negativ ist für entweder das erste oder das zweite UE.

15. Radiobasisstation nach einem der Ansprüche 11-14, die ferner einen Sender (502) umfasst, der konfiguriert ist, eine Angabe, einen ersten Leistungsanpassungsparameter für Sendungsleistungssteuerung für die Aufwärtsverbindung zu verwenden, an das erste UE zu senden, wobei der Leistungsanpassungsparameter dem ersten UE ermöglicht, eine Sendungsleistung für eine Aufwärtsverbindung an eine Interferenzänderung aufgrund von Paaren oder Entpaaren mit dem zweiten UE anzupassen.

16. Radiobasisstation nach Anspruch 15, wobei der Sender (502) ferner konfiguriert ist, den Leistungsanpassungsparameter vor dem Senden der Angabe an das erste UE zu senden.

**17.** Radiobasisstation nach Anspruch 15, wobei der Sender (502) ferner konfiguriert ist, die Angabe durch Senden des Leistungsanpassungsparameters an das erste UE zu senden.

**18.** Radiobasisstation nach einem der Ansprüche 15-17, wobei der Leistungsanpassungsparameter eine positive Leistungsschrittgröße für Sendeleistungssteuerung für die Aufwärtsverbindung umfasst, wenn das erste UE paarweise mit dem zweiten UE geplant ist, und eine negative Leistungsschrittgröße für Sendeleistungssteuerung für die Aufwärtsverbindung, wenn das erste UE entpaart von dem zweiten UE geplant ist.

**19.** Radiobasisstation nach einem der Ansprüche 15-17, wobei der Leistungsanpassungsparameter einen ersten Sendeleistungs-Offset für die Sendeleistungssteuerung für die Aufwärtsverbindung umfasst, wenn das erste UE paarweise mit dem zweiten UE geplant ist, und einen zweiten Sendeleistungs-Offset für die Sendeleistungssteuerung für die Aufwärtsverbindung, wenn das erste UE entpaart von dem zweiten UE geplant ist.

**Revendications**

**1.** Procédé mis en oeuvre par une station de base radio d'un réseau sans fil, pour l'adaptation de liaison à une planification MIMO (Multiple-Input-Multiple-Output, entrées multiples, sorties multiples) multiutilisateur dans une liaison montante, UL, le procédé comprenant les étapes consistant à :

- planifier (410) un premier équipement utilisateur, UE, par paire avec un second UE, la planification (410) du premier UE par paire avec le second UE comprenant les étapes consistant à :
- estimer (411) un gain de débit d'une planification appariée par rapport à une planification non appariée pour une paire d'UE comprenant le premier UE et le second UE, ainsi qu'un gain de débit pour chacun des premier et second UE individuellement, et
- planifier (412) le premier UE par paire avec le second UE lorsque le gain de débit estimé de la planification appariée par rapport à la planification non appariée pour la paire d'UE est supérieur à un premier seuil, et lorsque le gain de débit estimé pour chacun des premier et second UE individuellement est positif ;
- prédire (420) une valeur signal/bruit et interférences pour chacun des premier et second UE en tant qu'UE appariés, et
- utiliser (430) les valeurs signal/bruit et interférences prédites pour réaliser l'adaptation de la liaison des premier et second UE.

**2.** Procédé selon la revendication 1, dans lequel les valeurs signal/bruit et interférences prédites sont utilisées pour réaliser l'adaptation de la liaison jusqu'à ce que des valeurs signal/bruit et interférences mesurées soient disponibles pour chacun des premier et second UE lorsqu'ils sont appariés.

**3.** Procédé selon l'une quelconque des revendications précédentes, comprenant en outre, lorsque le premier UE est apparié au second UE :

- planifier (440) le premier UE désapparié du second UE,
- prédire (450) une valeur signal/bruit et interférences pour chacun des premier et second UE en tant qu'UE désappariés, et
- utiliser (460) les valeurs signal/bruit et interférences prédites pour réaliser l'adaptation de la liaison du premier et second UE.

**4.** Procédé selon la revendication 3, dans lequel les valeurs signal/bruit et interférences pour chacun des premier et second UE en tant qu'UE désappariés sont utilisées pour réaliser l'adaptation de la liaison jusqu'à ce que des valeurs signal/bruit et interférences mesurées soient disponibles pour chacun des premier et second UE lorsqu'ils sont désappariés.

**5.** Procédé selon l'une quelconque des revendications 3 à 4, dans lequel la planification (440) du premier UE désapparié du second UE comprend les étapes consistant à :

- estimer un gain de débit d'une planification appariée par rapport à une planification non appariée pour une paire d'UE comprenant le premier UE et le second UE, et pour chacun des premier et second UE individuellement, et
- planifier le premier UE désapparié du second UE lorsque le gain de débit estimé pour la paire d'UE est inférieur à un second seuil, ou lorsque le gain de débit estimé est négatif soit pour le premier soit pour le second UE.

6. Procédé selon l'une quelconque des revendications précédentes, comprenant en outre les étapes consistant à :

   - transmettre (470) une indication au premier UE pour utiliser un paramètre d'adaptation de la puissance pour la commande de puissance de transmission de liaison montante, lequel paramètre d'adaptation de puissance permet au premier UE d'adapter une puissance de transmission de liaison montante à un changement d'interférence dû à l'appariement ou le désappariement avec le second UE.

7. Procédé selon la revendication 6, comprenant en outre la transmission du paramètre d'adaptation de la puissance au premier UE avant la transmission de l'indication.

8. Procédé selon la revendication 6, dans lequel la transmission (470) de l'indication comprend la transmission du paramètre d'adaptation de la puissance au premier UE.

9. Procédé selon l'une quelconque des revendications 6 à 8, dans lequel le paramètre d'adaptation de la puissance comprend une taille de pas de puissance positive pour la commande de puissance de transmission de liaison montante lorsque le premier UE est planifié par paire avec le second UE et une taille de pas de puissance négative pour la commande de puissance de transmission de liaison montante lorsque le premier UE est planifié comme UE désapparié du second UE.

10. Procédé selon l'une quelconque des revendications 6 à 8, dans lequel le paramètre d'adaptation de la puissance comprend un premier écart de puissance de transmission pour la commande de puissance de transmission de liaison montante lorsque le premier UE est planifié par paire avec le second UE, et un second écart de puissance de transmission pour la commande de puissance de transmission de liaison montante lorsque le premier UE est planifié comme UE désapparié du second UE.

11. Station de base radio (500) d'un réseau sans fil, conçue pour l'adaptation de la liaison à une planification MIMO (Multiple-Input-Multiple-Output, entrées multiples, sorties multiples) multiutilisateur dans une liaison montante, UL, adaptée pour mettre en oeuvre les étapes de procédé selon la revendication 1.

12. Station de base radio selon la revendication 11, dans lequel le circuit de traitement (501) est en outre conçu pour :

   - planifier le premier UE désapparié du second UE,
   - prédire une valeur signal/bruit et interférences pour chacun des premier et second UE comme UE désappariés, et
   - utiliser les valeurs signal/bruit et interférences prédites pour réaliser l'adaptation de la liaison du premier et second UE.

13. Station de base radio selon l'une quelconque des revendications 11 à 12, dans lequel le circuit de traitement (501) est conçu pour utiliser les valeurs signal/bruit et interférences prédites pour réaliser l'adaptation de la liaison jusqu'à ce que les valeurs signal/bruit et interférences mesurées soient disponibles pour chacun des premier et second UE lorsqu'ils sont appariés ou désappariés.

14. Station de base radio selon l'une quelconque des revendications 11 à 13, dans lequel le circuit de traitement (501) est conçu pour planifier le premier UE désapparié du second UE en étant conçu pour :

   - estimer un gain de débit d'une planification appariée par rapport à une planification non appariée pour une paire d'UE comprenant le premier UE et le second UE, et pour chacun des premier et second UE individuellement, et
   - planifier le premier UE désapparié du second UE lorsque le gain de débit estimé pour la paire d'UE est inférieur à un second seuil, ou lorsque le gain de débit estimé est négatif soit pour le premier soit pour le second UE.

15. Station de base radio selon l'une quelconque des revendications 11 à 14, comprenant en outre un transmetteur (502) conçu pour transmettre une indication au premier UE pour utiliser un paramètre d'adaptation de la puissance pour la commande de puissance de transmission de liaison montante, lequel paramètre d'adaptation de puissance permet au premier UE d'adapter une puissance de transmission de liaison montante à un changement d'interférence dû à l'appariement ou le désappariement avec le second UE.

**16.** Station de base radio selon la revendication 15, dans lequel le transmetteur (502) est conçu en outre pour transmettre le paramètre d'adaptation de la puissance au premier UE avant de transmettre l'indication.

**17.** Station de base radio selon la revendication 15, dans lequel le transmetteur (502) est conçu en outre pour transmettre l'indication en transmettant le paramètre d'adaptation de la puissance au premier UE.

**18.** Station de base radio selon l'une quelconque des revendications 15 à 17, dans lequel le paramètre d'adaptation de la puissance comprend une taille de pas de puissance positive pour la commande de puissance de transmission de liaison montante lorsque le premier UE est planifié par paire avec le second UE, et une taille de pas de puissance négative pour la commande de puissance de transmission de liaison montante lorsque le premier UE est planifié comme UE désapparié du second UE.

**19.** Station de base radio selon l'une quelconque des revendications 15 à 17, dans lequel le paramètre d'adaptation de puissance comprend un premier décalage de puissance de transmission pour la commande de puissance de transmission de liaison montante lorsque le premier UE est planifié par paire avec le second UE et un second décalage de puissance de transmission pour la commande de puissance de transmission de liaison montante lorsque le premier UE est planifié comme UE désapparié du second UE.

Fig. 1

Fig. 2

Fig. 3

EP 2 870 814 B1

| Schedule a first UE in pair with a second UE | 410 |

| Predict a SINR value for each of the first and the second UE as paired | 420 |

| Use the predicted SINR values when performing link adaptation for the first and second UE | 430 |

# Fig. 4a

UE paired?

NO        YES

410

420

430

| Schedule the first UE de-paired from the second UE | 440 |

| Predict a SINR value for each of the first and the second UE as de-paired | 450 |

| Use the predicted SINR values when performing link adaptation for the first and second UE | 460 |

# Fig. 4b

410

Estimate a throughput gain of a paired scheduling relative to an unpaired scheduling ⌐411

UE paired?

NO

Schedule the first UE in pair with the second UE when the estimated throughput gain is above a first threshold, and when the estimated throughput gain is positive for each of the first and second UEs ⌐412

420

430

Transmit an indication to the first UE to use a power adaptation parameter for uplink transmission power control enabling the first UE to adapt an uplink transmission power to an interference change due to pairing or de-pairing with the second UE ⌐470

## Fig. 4c

**550** 1st UE

**560** 2nd UE

508

**502** Transmitter

**501** Processing circuit

**500** RBS

Fig. 5

**EP 2 870 814 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2012069757 A1, M. JIANG